# EUROPÄISCHE PATENTSCHRIFT

(11) **EP 2 365 109 B1**
(45) Veröffentlichungstag und Bekanntmachung des Hinweises auf die Patenterteilung: **01.05.2013**
(21) Anmeldenummer: 10002097.3
(22) Anmeldetag: 02.03.2010
(51) Int. Cl.: C23C 28/02, F16C 33/12

(54) **Gleitlagerverbundwerkstoff mit galvanisch abgeschiedener Laufschicht**
Friction bearing composite material with galvanised running layer
Matériau composite de coussinet doté d'une couche de roulement isolée de manière galvanique

(43) Veröffentlichungstag der Anmeldung: 14.09.2011
(73) Patentinhaber: KS Gleitlager GmbH, 68789 St. Leon-Rot (DE)
(72) Erfinder: Seremeti, Megjit, 26871 Papenburg (DE); Reinicke, Rolf, Dr., 76669 Bad Schönborn (DE); Schubert, Werner, 69168 Wiesloch (DE)
(74) Vertreter: Dreiss

(56) Entgegenhaltungen:
- EP-A1- 0 921 211
- EP-A2- 1 933 048
- DE-A1-102004 038 191
- DE-A1-102005 045 701
- DE-A1-102006 060 474
- GB-A- 2 294 981

## Beschreibung

Die Erfindung betrifft einen Gleitlagerverbundwerkstoff mit einer Trägerschicht aus Stahl und einer darauf unlösbar aufgebrachten bleifreien Lagermetallschicht aus Kupferlegierung, insbesondere Kupfer-Zinn-Bronze oder Messing, oder aus Aluminiumlegierung, insbesondere Aluminium-Zinn-, Aluminium-Zink- oder Aluminium-Silizium-Legierung, und mit einer galvanisch abgeschiedenen bleifreien Laufschicht auf Zinn-Kupfer-Basis mit einer Dicke von 5-20 µm, wobei zwischen der Lagermetallschicht und der Laufschicht eine galvanisch abgeschiedene Sperrschicht vorgesehen ist.

Ein derartiger Gleitlagerverbundwerkstoff ist beispielsweise bekannt aus DE 10 2004 038 191 A1 der Anmelderin.

DE 10 2006 060 474 A1 offenbart einen Gleitlagerverbundwerkstoff mit einer Trägerschicht aus Stahl, mit einer darauf unlösbar aufgebrachten Lagermetallschicht aus Kupferlegierung, darauf einer Diffusionssperrschicht und darauf einer zum Gleitpartner exponierten galvanisch abgeschiedenen bleifreien Laufschicht auf Zinnbasis.

EP 0 921 211 A1 offenbart ebenfalls einen gattungsgemäßen Gleitlagerverbundwerkstoff.

Der vorliegenden Erfindung liegt die Aufgabe zugrunde, das Dauerbetriebsverhalten des Gleitlagerverbundwerkstoffs bzw. eines hieraus hergestellten Gleitlagerelements in motorischen oder motornahen Anwendungen, wo der Gleitlagerverbundwerkstoff unter erhöhten Temperaturen teils aggressiven Schmiermedien ausgesetzt ist, zu verbessern.

Diese Erfindung wird bei einem Gleitlagerverbundwerkstoff der eingangs genannten Art erfindungsgemäß dadurch gelöst, dass auf der einem Gleitpartner zugewandten Seite der Laufschicht eine zinkhaltige galvanische Schicht einer Dicke von 1 - 10 µm abgeschieden ist.

Die Anmelderin hat nämlich festgestellt, dass sich die Zusammensetzung der Laufschicht auf Zinn-Kupfer-Basis in Wechselwirkung mit heißen Schmiermedien, insbesondere modernen Motorölen, verändert. Sie hat weiter festgestellt, dass dies darauf zurückzuführen ist, dass Kupfer aus der Laufschicht in die angrenzende Schmiermittelphase übergeht. Hierdurch ändert sich der definierte Zustand der Laufschicht und damit deren Dauergebrauchseigenschaften. Die Anmeldering hat weiter erfindungsgemäß festgestellt, dass dem durch die zusätzliche dünne zinkhaltige galvanische Schicht begegnet werden kann. Diese Schicht fungiert nämlich als Zinkspender für die Laufschicht, derart, dass Zink aus der zusätzlichen galvanischen Schicht in die Laufschicht auf Zinn-Kupfer-Basis diffundiert, und zwar gerade bei Gebrauchstemperaturen typischer motorischer bzw. motorennaher Anwendungen von Gleitlagerelementen. Das eindiffundierende Zink erhöht die Stabilität des Kupfers in der Laufschicht. Die zusätzliche dünne zinkhaltige galvanische Schicht wirkt also nicht lediglich als physikalische Sperrschicht, sondern sie wird selbst in dem vorstehend genannten Sinne "aktiv". Auf diese Weise wird erfindungsgemäß das Dauergebrauchsverhalten aufgrund einer erhöhten Stabilität eines wohl definierten metallurgischen Zustands der Laufschicht verbessert.

Bei der zinkhaltigen galvanischen Schicht kann es sich beispielsweise um eine Schicht aus Reinzink oder auf Zinkbasis (>50 Gew.-% Zink) handeln. In Weiterbildung der Erfindung wurde aber festgestellt, dass die zinkhaltige galvanische Schicht auch dann als Zinkspender für die Laufschicht fungieren kann, wenn sie nur 1 bis 45 Gew.-% Zink, insbesondere 2 - 45 Gew.-% Zink, insbesondere 5 - 45 Gew.-% Zink, insbesondere 10 - 45 Gew.―% Zink, insbesondere 20 - 40 Gew.―% Zink enthält.

Nach einer bevorzugten Ausführungsform der Erfindung ist die zinkhaltige galvanische Schicht aus einem Zinn und Zink enthaltenden Bad abgeschieden. Die zinkhaltige Schicht beruht hierbei vorzugsweise auf Zinn-Zink mit vorzugsweise 1 bis 45 Gew.―% Zink. Es wäre aber auch denkbar, dass die zinkhaltige galvanische Schicht aus einem galvanischen Bad mit Nickel und Zink, Eisen und Zink, Kobalt und Zink und/oder Wismut und Zink abgeschieden wird.

Die Dicke dieser zusätzlichen zinkhaltigen galvanischen Schicht beträgt vorteilhafterweise 1 bis 10 µm, insbesondere 2 bis 10, insbesondere 2 - 8 µm, insbesondere 2 - 6 µm und weiter insbesondere 2 - 5 µm.

Die erwähnte Lagermetallschicht aus Kupferlegierung kann beispielsweise von einer Kupfer-Zinn-Bronze, insbesondere CuSn(4-15)-Legierung, oder von Messing, insbesondere CuZn(18-43)-Legierung, insbesondere CuZn(18-25)-Legierung oder CuZn(27-34)-Legierung, gebildet sein, jeweils gegebenenfalls mit weiteren Legierungszusätzen von insgesamt höchstens 10 Gew.-%. Sie kann aber auch von einer Kupfer-Aluminium-Legierung, einer Kupfer-Nickel-Legierung oder einer Kupfer-Mangan-Legierung, oder aus einer Aluminiumlegierung, insbesondere Aluminium-Zinn-, wie AlSn(4-25), Aluminium-Zink-, wie AlZn(2-10), oder Aluminium-Silizium-Legierung, wie AlSi(1-12), jeweils gegebenenfalls mit weiteren Legierungszusätzen von insgesamt höchstens 10 Gew.―%, gebildet sein.

Die Laufschicht umfasst in vorteilhafter Weise eine SnCu(4-12)-Legierung.

Die Laufschicht weist vorteilhafterweise eine Dicke von 8 bis 18 µm und weiter insbesondere von 10 bis 15 µm auf.

Die Dicke der Sperrschicht ist nach einer bevorzugten Ausführungsform < 4 µm, insbesondere < 3,5 µm, insbesondere < 3 µm.

Die Sperrschicht kann Nickel umfassen und aus einer Nickel enthaltenden Galvanik abgeschieden sein. Die Sperrschicht kann insbesondere von einer Zinn-Nickel-Schicht mit beispielsweise höchstens 37 Gew.-% Nickel gebildet sein.

Des Weiteren kann es sich als vorteilhaft erweisen, wenn zwischen der Lagermetallschicht und der Laufschicht eine galvanisch abgeschiedene Sperrschicht auf Eisenbasis vorgesehen ist. Gegebenenfalls kann diese Sperrschicht auf Eisenbasis zusätzlich zu einer weiteren Sperrschicht, insbesondere der vorstehend beschriebenen Art, vorgesehen sein.

Die Erfindung betrifft außerdem Pleuellagerschalen und Kurbelwellenlagerschalen, die aus einem

Gleitlagerverbundwerkstoff der erfindungsgemäßen Art hergestellt sind.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:

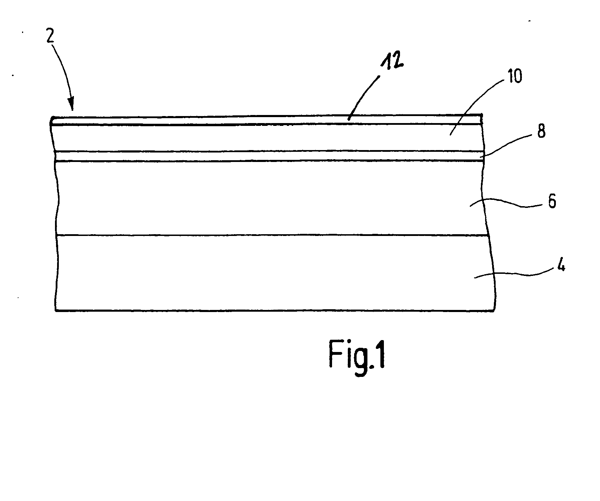

Figur 1 eine schematische nicht maßstabsgetreue Schnittansicht eines erfindungsgemäßen Gleitlagerverbundwerkstoffs.

Figur 1 zeigt einen insgesamt mit dem Bezugszeichen 2 bezeichneten Gleitlagerverbundwerkstoff mit einer Trägerschicht 4 aus Stahl und einer darauf unlösbar aufgebrachten bleifreien Lagermetallschicht 6 aus Kupferlegierung, insbesondere aus einer Kupfer-Zinn-Bronze. Die Kupfer-Zinn-Bronze umfasst vorteilhafterweise eine CuSn(4-15)-Legierung. Sie kann auch Bismut enthalten und insbesondere in vorteilhafter Weise von einer CuSn(9-11)Bi(7-9)Zn(1-4)-Legierung, insbesondere von einer CuSn10Bi8Zn3-Legierung gebildet sein. Die Lagermetallschicht 6 kann auch aus einer Aluminiumlegierung gebildet sein. Auf diese Lagermetallschicht 6 ist galvanisch eine dünne Sperrschicht 8 aufgebracht, die insbesondere Nickel und/oder Eisen umfassen kann. Die Dicke der Sperrschicht 8 kann unterhalb von 4 µm, insbesondere unterhalb von 3 µm liegen. Auf die Sperrschicht ist wiederum galvanisch eine Laufschicht 10 auf Zinn-Kupfer-Basis aufgebracht. Deren Dicke ist vorzugsweise geringer als die Dicke der Lagermetallschicht 6. Es handelt sich hier in vorteilhafter Weise um eine SnCu(4-12)-Legierung.

Um die Zusammensetzung, d.h. den definierten Zustand der Laufschicht 10 auf Zinn-Kupfer-Basis dauerhaft zu stabilisieren, ist auf die Laufschicht 10 eine weitere galvanische dünne zinkhaltige Schicht aufgebracht, deren Dicke vorzugsweise deutlich unter 10 µm beträgt. Es kann sich hierbei in vorteilhafter Weise um eine Schicht 10 aus Reinzink oder aus Zinn-Zink handeln. Diese zusätzliche galvanische Schicht 12 bzw. das Zink dieser Schicht 12 führt zu einer dauerhaften Stabilisierung des Zustands der Laufschicht 10 auf Zinn-Kupfer-Basis. Zink diffundiert aus der Schicht 12 in die darunter liegende Laufschicht 10 und wirkt einem Übergang von Kupfer aus der Laufschicht 10 in eine heiße Schmiermittelphase im Gebrauch eines aus dem Gleitlagerverbundwerkstoff hergestellten Gleitlagers bei motorischen oder motorennahen Anwendungen entgegen. Hierdurch wird die Dauergebrauchstauglichkeit des Gleitlagerelements erfindungsgemäß erhöht.

## Patentansprüche

1. Gleitlagerverbundwerkstoff (2) mit einer Trägerschicht (4) aus Stahl und einer darauf unlösbar aufgebrachten bleifreien Lagermetallschicht (6) aus Kupferlegierung oder aus Aluminiumlegierung und mit einer galvanisch abgeschiedenen bleifreien Laufschicht (10) auf Zinn-Kupfer-Basis mit einer Dicke von 5-20µm, wobei zwischen der Lagermetallschicht (6) und der Laufschicht (10) eine galvanisch abgeschiedene Sperrschicht (8) vorgesehen ist, **dadurch gekennzeichnet, dass** auf der einem Gleitpartner zugewandten Seite der Laufschicht (10) eine zinkhaltige galvanische Schicht (12) einer Dicke von 1 - 10 µm abgeschieden ist.

2. Gleitlagerverbundwerkstoff nach Anspruch 1, **dadurch gekennzeichnet, dass** die zinkhaltige galvanische Schicht (12) eine Schicht aus Reinzink oder auf Zinkbasis ist.

3. Gleitlagerverbundwerkstoff nach Anspruch 1, **dadurch gekennzeichnet, dass** die zinkhaltige galvanische Schicht (12) 1 - 45 Gew.-% Zink enthält.

4. Gleitlagerverburidwerkstoff nach Anspruch 1, 2 oder 3, **dadurch gekennzeichnet, dass** die zinkhaltige galvanische Schicht (12) aus einem Zinn und Zink enthaltende Bad abgeschieden ist.

5. Gleitlagerverbundwerkstoff nach einem der vorstehenden Ansprüche, **dadurch gekennzeichnet, dass** die Dicke der zinkhaltigen galvanischen Schicht (12) 2 - 10 µm

6. Gleitlagerverbundwerkstoff nach einem oder mehreren der vorstehenden Ansprüche, **dadurch gekennzeichnet, dass** die Lagermetallschicht (6) aus Kupferlegierung von einer Kupfer-Zinn-Bronze oder von Messing oder von einer Kupfer-Aluminium-Legierung, oder von einer Kupfer-Nickel-Legierung oder von einer Kupfer-Mangan-Legierung, jeweils gegebenenfalls mit weiteren Legierungszusätzen von insgesamt höchstens 10 Gew.-%, gebildet ist.

7. Gleitlagerverbundwerkstoff nach Anspruch 6, **dadurch gekennzeichnet, dass** die Kupfer-Zinn-Bronze zusätzlich Bismut enthält und insbesondere eine CuSn(9-11)Bi(7-9)-Legierung oder eine CuSn(9-11)Bi(7-9)Zn(1-4)-Legierung umfasst.

8. Gleitlagerverbundwerkstoff nach einem oder mehreren der vorstehenden Ansprüche, **dadurch gekennzeichnet, dass** die Laufschicht (10) eine SnCu(4-12)-Legierung umfasst.

9. Gleitlagerverbundwerkstoff nach einem oder mehreren der vorstehenden Ansprüche, **dadurch gekennzeichnet, dass** die Laufschicht (10) eine Dicke von 8 - 18 µm und weiter insbesondere von 10 - 15 µm aufweist.

10. Gleitlagerverbundwerkstoff nach einem oder mehreren der vorstehenden Ansprüche, **dadurch gekennzeichnet, dass** die Dicke der Sperrschicht (8) < 4 µm ist.

11. Gleitlagerverbundwerkstoff nach einem oder mehreren der vorstehenden Ansprüche, **dadurch gekennzeichnet, dass** die Sperrschicht (8) Nickel umfasst und aus einer Nickel enthaltenden Galvanik abgeschieden ist.

12. Gleitlagerverbundwerkstoff nach einem oder mehreren der vorstehenden Ansprüche, **dadurch gekennzeichnet, dass** die Sperrschicht (8) auf Eisenbasis ausgebildet ist.

13. Pleuellagerschale hergestellt aus einem Gleitlagerverbundwerkstoff (2) nach einem oder mehreren der vorstehenden Ansprüche.

14. Kurbelwellenlagerschale hergestellt aus einem Gleitlagerverbundwerkstoff (2) nach einem oder mehreren der vorstehenden Ansprüche 1-12.

## Claims

1. Plain bearing composite material (2) having a support layer (4) made of steel and a lead-free bearing metal layer (6) non-detachably applied to the support layer and made of copper alloy or of aluminium alloy, and having an electrodeposited lead-free running layer (10) on tin-copper basis with a thickness of 5 - 20 µm, an electrodeposited barrier layer (8) being provided between the bearing metal layer (6) and the running layer (10), **characterised in that** a zinc-containing electroplating layer (12) of a thickness of 1 - 10 µm is deposited on the side of the running layer (10) facing a sliding partner.

2. Plain bearing composite material according to Claim 1, **characterised in that** the zinc-containing electroplating layer (12) is a layer made of pure zinc or based on zinc.

3. Plain bearing composite material according to Claim 1, **characterised in that** the zinc-containing electroplating layer (12) contains 1 - 45% by weight of zinc.

4. Plain bearing composite material according to Claim 1, 2 or 3, **characterised in that** the zinc-containing electroplating layer (12) is deposited from a bath containing tin and zinc.

5. Plain bearing composite material according to one of the preceding claims, **characterised in that** the thickness of the zinc-containing electroplating layer (12) is 2 - 10 µm.

6. Plain bearing composite material according to one or more of the preceding claims, **characterised in that** the bearing metal layer (6) made of copper alloy is formed from a copper-tin-bronze or from brass or from a copper-aluminium alloy, or from a copper-nickel alloy or from a copper-manganese alloy, each optionally having further alloying additions of at most 10% by weight in total.

7. Plain bearing composite material according to Claim 6, **characterised in that** the copper-tin-bronze additionally contains bismuth and in particular comprises a CuSn(9-11)Bi(7-9) alloy or a CuSn(9-11)Bi(7-9)Zn(1-4) alloy.

8. Plain bearing composite material according to one or more of the preceding claims, **characterised in that** the running layer (10) comprises a SnCu(4-12) alloy.

9. Plain bearing composite material according to one or more of the preceding claims, **characterised in that** the running layer (10) has a thickness of 8 - 18 µm and further in particular of 10 - 15 µm.

10. Plain bearing composite material according to one or more of the preceding claims, **characterised in that** the thickness of the barrier layer (8) is < 4 µm.

11. Plain bearing composite material according to one or more of the preceding claims, **characterised in that** the barrier layer (8) comprises nickel and is deposited from an electroplating facility containing nickel.

12. Plain bearing composite material according to one or more of the preceding claims, **characterised in that** the barrier layer (8) is formed on an iron basis.

13. Connecting-rod bearing shell produced from a plain bearing composite material (2) according to one or more of the preceding claims.

14. Crankshaft-bearing shell produced from a plain bearing composite material (2) according to one or more of the preceding Claims 1-12.

## Revendications

1. Matériau composite pour palier lisse (2) avec une couche support (4) en acier et, rapportée de manière inamovible sur celle-ci, une couche de métal antifriction exempte de plomb (6) en alliage de cuivre ou en alliage d'aluminium, et avec une couche de glissement (10) exempte de plomb d'une épaisseur de 5 à 20 µm à base d'alliage cuivre-étain rapportée par électrodéposition, une couche barrière (8) rapportée par électrodéposition étant prévue entre la couche de métal antifriction (6) et la couche de glissement (10), **caractérisé en ce qu'**une couche contenant du zinc (12) d'une épaisseur de 1 à 10 µm est rapportée par électrodéposition sur la face de la couche de glissement (10) située en regard d'un élément glissant antagoniste.

2. Matériau composite pour palier lisse selon la revendication 1, **caractérisé en ce que** la couche électrolytique contenant du zinc (12) est une couche en zinc pur ou à base de zinc.

3. Matériau composite pour palier lisse selon la revendication 1, **caractérisé en ce que** la couche électrolytique contenant du zinc (12) contient 1 à 45 % en poids de zinc.

4. Matériau composite pour palier lisse selon l'une des revendications 1, 2 et 3, **caractérisé en ce que** la couche électrolytique contenant du zinc (12) est électrodéposée à partir d'un bain contenant de l'étain et du zinc.

5. Matériau composite pour palier lisse selon l'une des revendications précédentes, **caractérisé en ce que** l'épaisseur de la couche électrolytique contenant du zinc (12) est comprise entre 2 et 10 µm.

6. Matériau composite pour palier lisse selon l'une ou plusieurs des revendications précédentes, **caractérisé en ce que** la couche de métal antifriction en alliage de cuivre (6) est composée d'un alliage cuivre-étain-bronze, de laiton, d'un alliage cuivre-aluminium, d'un alliage cuivre-nickel ou d'un alliage cuivre-manganèse, ainsi qu'éventuellement d'autres éléments d'addition dont le pourcentage en poids cumulé est inférieur ou égal à 10 %.

7. Matériau composite pour palier lisse selon la revendication 6, **caractérisé en ce que** l'alliage cuivre-étain-bronze contient en outre du bismuth et en particulier un alliage CuSn(9-11)Bi(7-9) ou un alliage CuSn(9-11)Bi(7-9)Zn(1-4).

8. Matériau composite pour palier lisse selon l'une ou plusieurs des revendications précédentes, **caractérisé en ce que** la couche de glissement (10) comprend un alliage SnCu (4-12) .

9. Matériau composite pour palier lisse selon l'une ou plusieurs des revendications précédentes, **caractérisé en ce que** la couche de glissement (10) présente une épaisseur comprise entre 8 et 18 µm, de préférence entre 10 et 15 µm.

10. Matériau composite pour palier lisse selon l'une ou plusieurs des revendications précédentes, **caractérisé en ce que** l'épaisseur de la couche barrière (8) est inférieure à 4 µm.

11. Matériau composite pour palier lisse selon l'une ou plusieurs des revendications précédentes, **caractérisé en ce que** la couche barrière (8) comprend du nickel et est électrodéposée à partir d'un bain contenant du nickel.

12. Matériau composite pour palier lisse selon l'une ou plusieurs des revendications précédentes, **caractérisé en ce que** la couche barrière (8) est à base de fer.

13. Coquille de coussinet pour bielle fabriquée dans un matériau composite pour palier lisse (2) selon l'une ou plusieurs des revendications précédentes.

14. Coquille de coussinet pour vilebrequin fabriquée dans un matériau composite pour palier lisse (2) selon l'une ou plusieurs des revendications 1 à 12.
